Europäisches Patentamt

European Patent Office

Office européen des brevets

(19)

(11) **EP 0 657 321 B1**

(12) ## FASCICULE DE BREVET EUROPEEN

(45) Date de publication et mention
de la délivrance du brevet:
**28.01.1998 Bulletin 1998/05**

(51) Int. Cl.$^6$: **B60L 9/30**

(21) Numéro de dépôt: **94402836.4**

(22) Date de dépôt: **09.12.1994**

(54) **Système d'alimentation multicourant à haute disponibilité pour engin de locomotive ferroviaire**

Mehrfachstromversorgungssystem mit hoher Verfügbarkeit für eine Lokomotive

High availability multi-current supply system for a locomotive

(84) Etats contractants désignés:
**BE CH DE ES FR GB IT LI LU NL PT SE**

(30) Priorité: **13.12.1993 FR 9314923**

(43) Date de publication de la demande:
**14.06.1995 Bulletin 1995/24**

(73) Titulaire:
**GEC ALSTHOM TRANSPORT SA
75016 Paris (FR)**

(72) Inventeur: **Thevenon, Alain
F-69300 Caluire (FR)**

(74) Mandataire:
**Fournier, Michel et al
c/o ALCATEL ALSTHOM,
Département de Propriété Industrielle,
30, avenue Kléber
75116 Paris (FR)**

(56) Documents cités:
**EP-A- 0 383 971          EP-A- 0 514 580**

• **ZEV GLASERS ANNALEN, vol.113, no.6/7, Juillet
1989, DE pages 259 - 272 G. WIEGNER 'GTO-
STROMRICHTER FÜR BAHNEN'**

## Description

La présente invention concerne l'alimentation électrique des engins de locomotion en général et plus particulièrement un système d'alimentation multicourant pour locomotive adapté aussi bien aux zones disposant de l'alimentation continue qu'aux zones disposant de l'alimentation alternative et ceci avec une haute disponibilité.

En France et dans d'autres pays l'alimentation électrique dont dispose le réseau ferroviaire varie suivant les zones. De façon générale il existe des zones pourvues d'une alimentation en courant alternatif de 25 kV à 50Hz ou de 15kV à 16,67 Hz et des zones pourvues d'une alimentation en courant continu, la tension étant soit de 3kV, soit de 1,5kV.

Pour que les trains puissent circuler indifféremment sur l'ensemble de ces zones, il a donc été nécessaire de prévoir des locomotives multicourant, c'est à dire capables de s'alimenter aussi bien en courant alternatif qu'en courant continu.

Les locomotives multicourant ont pris véritablement leur essor avec l'emploi des convertisseurs utilisant des thyristors GTO comme il est décrit dans l'article "Convertisseurs à GTO pour transports ferroviaires" de G.Wiegner paru dans la revue ZEV, juillet 1989. Cet article montre que les thyristors GTO ont permis la mise au point de convertisseurs dénommés à un quadrant, 2 quadrants ou 4 quadrants, utilisables pour la conversion du courant d'alimentation aussi bien alternatif que continu, en courant haché appliqué directement à l'entrée des onduleurs qui commandent les moteurs de la locomotive.

C'est ainsi que, comme l'explique l'article, la machine ICE des chemins de fer fédéraux allemands utilise des convertisseurs de puissance 4 quadrants pour l'alimentation en courant alternatif dans lesquels les points milieux des deux paires de thyristors GTO sont connectés entre eux par l'enroulement secondaire d'un transformateur dont l'enroulement primaire est connecté au réseau d'alimentation en courant alternatif.

De même, cet article mentionne les locomotives bicourant de la série 252 des chemins de fer espagnols (RENFE) utilisant trois convertisseurs à 4 quadrants pour l'alimentation en courant alternatif et dont deux des convertisseurs sont utilisés comme hacheurs abaisseurs en cas de parcours sous une alimentation en courant continu à 3 kV.

Malheureusement, dans ce type de locomotive chaque bogie comporte deux moteurs alimentés par un ensemble de 2 ou 3 convertisseurs et d'un ou 2 onduleurs. Les convertisseurs et les onduleurs d'un même bogie présentent des points communs (capacités de filtre, commande de GTO etc.) tels que toute défaillance, (la défaillance la plus courante d'un convertisseur étant la mise en court-circuit de ses trois sorties) provoque la perte de l'effort de traction sur les 2 moteurs du même bogie. Dans le cas d'une locomotive équipée de 4 moteurs, une défaillance conduit donc à la disparition de 50% de l'effort. Lorsque la locomotive est lourdement chargée, il est alors impossible d'assurer la fin du service. Cela perturbe l'horaire du train concerné et provoque également des perturbations pour les autres trains.

C'est pourquoi un premier but de l'invention est de réaliser un système d'alimentation multicourant disposant d'au moins quatre moteurs dans lequel les moteurs continuent à être alimentés même en cas de défaillance d'un convertisseur de tension.

Un autre but de l'invention est de réaliser un système d'alimentation multicourant pour quatre moteurs conservant l'effort sur les quatre moteurs en cas de défaillance sur un convertisseur, et disposant de l'effort sur trois moteurs en cas de défaillance d'un onduleur ou d'un moteur

Un premier objet de l'invention est donc un système d'alimentation d'une locomotive multicourant à 2N moteurs, avec N supérieur à égal à 2, comprenant 2N paires de convertisseurs de tension associés respectivement aux 2N moteurs, chacun des moteurs étant alimenté au moyen d'un onduleur connecté aux bornes d'un condensateur de charge et chacune des paires comportant un premier et un second convertisseurs de tension connectés en parallèle aux bornes du condensateur de charge. Lorsque la locomotive doit être alimentée en courant alternatif, le point milieu du premier convertisseur de chaque paire de convertisseurs est connecté au point milieu du second convertisseur de la même paire de convertisseurs de façon à ce que chacune des paires de convertisseurs forme un convertisseur 4 quadrants, cette connexion étant réalisée par l'intermédiaire de l'enroulement secondaire d'un transformateur dont l'enroulement primaire est connecté directement aux bornes d'une alimentation alternative et d'un sectionneur en position fermée. Lorsque la locomotive est alimentée en courant continu, et en considérant i tel que $1 \leq i \leq N$, les moteurs $M_{2i}$ sont tous connectés en parallèle et les moteurs $M_{2i-1}$ sont égale-ment tous connectés en parallèle, les points milieux des premier et second convertisseurs de chaque paire 2i de convertisseurs de tension sont connectés à la paire 2i-1 de convertisseurs de tension par l'intermédiaire d'une inductance, et les points milieux des premier et second convertisseurs de chaque paire 2i-1 de convertisseurs de tension sont connectés à la paire 2i de convertisseurs de tension.

Un commutateur associé à chacune des paires de convertisseurs de tension permet:

a) dans une première position, de connecter chacune des paires 2i-1 ou 2i de convertisseurs de tension en tant que hacheur abaisseur de tension pour respectivement le moteur $M_{2i}$ ou $M_{2i-1}$, lorsque la tension d'alimentation continue alimentant la locomotive est plus élevée que la tension nécessaire aux bornes de chacun des moteurs, et

b) dans une deuxième position, de connecter chacune des paires 2i-1 ou 2i de convertisseurs de tension en tant que hacheur élévateur de tension pour respectivement le moteur $M_{2i}$ ou $M_{2i-1}$, lorsque la tension d'alimentation continue alimentant la locomotive est moins élevée que la tension nécessaire aux bornes de chacun des moteurs.

Le système de l'invention comprend également un commutateur associé à chaque paire i de convertisseurs de tension pour déconnecter celui-ci en cas de défaillance.

Un autre objet de l'invention est également un système d'alimentation d'une locomotive multicourant à 2N moteurs, avec N supérieur ou égal à 2, comprenant 2N paires de convertisseurs de tension associés respectivement aux 2N moteurs, chacun des moteurs étant alimenté au moyen d'un onduleur connecté aux bornes d'un condensateur de charge et chacune des paires comportant un premier et un second convertisseurs de tension connectés en parallèle aux bornes du condensateur de charge. Lorsque la locomotive doit être alimentée en courant alternatif, le point milieu du premier convertisseur de chaque paire de convertisseurs est connecté au point milieu du second convertisseur de la même paire de convertisseurs de façon à ce que chacune des paires de convertisseurs forme un convertisseur 4 quadrants, cette connexion étant réalisée par l'intermédiaire de l'enroulement secondaire d'un transformateur dont l'enroulement primaire est connecté directement aux bornes d'une alimentation alternative et d'un sectionneur en position fermée. Lorsque la locomotive est alimentée en courant continu et en considérant i tel que $1 \leq i \leq N$,

a) si la tension d'alimentation fournie est supérieure à la tension d'alimentation des moteurs,

i) le point milieu du premier convertisseur de chaque paire 2i-1 de convertisseurs de tension est connecté au point de potentiel haut de la paire 2i de convertisseurs de tension par l'intermédiaire d'une inductance et le point milieu du premier convertisseur de chaque paire 2i de convertisseurs de tension est connecté au point de potentiel bas de la paire 2i-1 de convertisseurs de tension par l'intermédiaire d'une inductance,

ii) le point milieu du second convertisseur de chaque paire 2i-1 de convertisseurs de tension est connecté au point de potentiel haut de la paire 2i+2 de convertisseurs de tension par l'intermédiaire d'une inductance et le point milieu du second convertisseur de chaque paire de convertisseurs de tension 2i est connecté au point de potentiel bas de la paire 2i+1 de convertisseurs de tension par l'intermédiaire d'une inductance, et

iii) le point milieu du second convertisseur de la paire 2N-1 de convertisseurs de tension est connecté au point de potentiel haut de la paire 2 de convertisseurs de tension par l'intermédiaire d'une inductance et le point milieu du second convertisseur de la paire 2N de convertisseurs de tension est connecté au point de potentiel bas de la paire 1 de convertisseurs de tension par l'intermédiaire d'une inductance,

de sorte que les convertisseurs de tension fonctionnent en hacheurs abaisseurs de tension; et

b) si la tension d'alimentation fournie est inférieure à la tension d'alimentation des moteurs, les points milieux des premier et second convertisseurs de chaque paire 2i-1 de convertisseurs de tension sont connectés au point de potentiel bas de la paire 2i de convertisseurs de tension par l'intermédiaire d'une inductance, et les points milieux des premiers et second convertisseurs de chaque paire 2i de convertisseurs de tension sont connectés au point de potentiel haut de la paire 2i-1 de convertisseurs de tension, de sorte que lesdits convertisseurs de tension fonctionnent en hacheurs élévateurs de tension.

Ces objets ainsi que d'autres seront mieux compris à la lecture de la description qui suit faite en référence aux dessins joints dans lesquels:

la figure 1 est une représentation synoptique d'un premier mode de réalisation à quatre moteurs du système d'alimentation multicourant selon l'invention,
la figure 2 est une représentation synoptique d'un deuxième mode de réalisation à quatre moteurs du système d'alimentation multicourant selon l'invention, et
la figure 3 est une représentation synoptique du deuxième mode de réalisation de la figure 2 étendu à 2N moteurs.

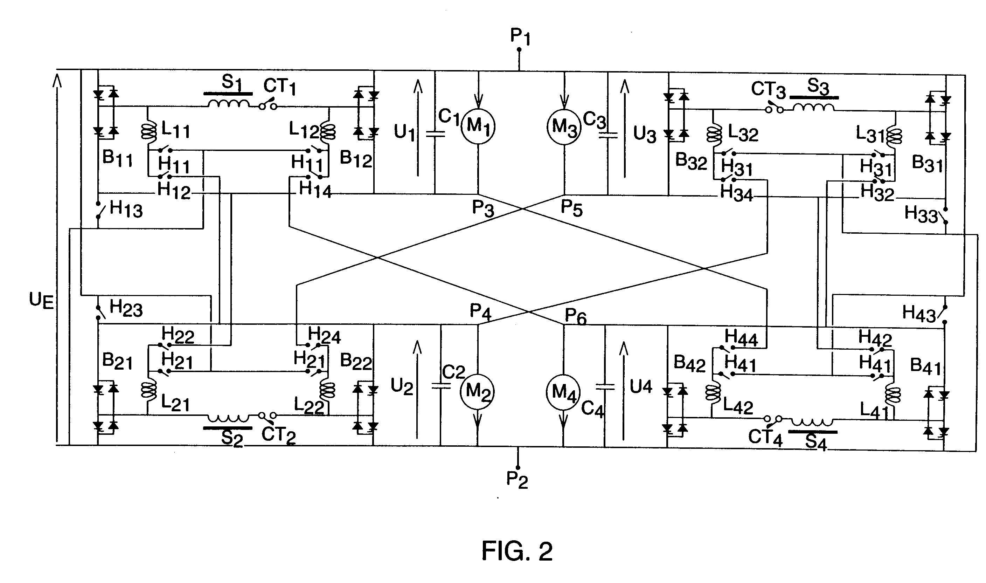

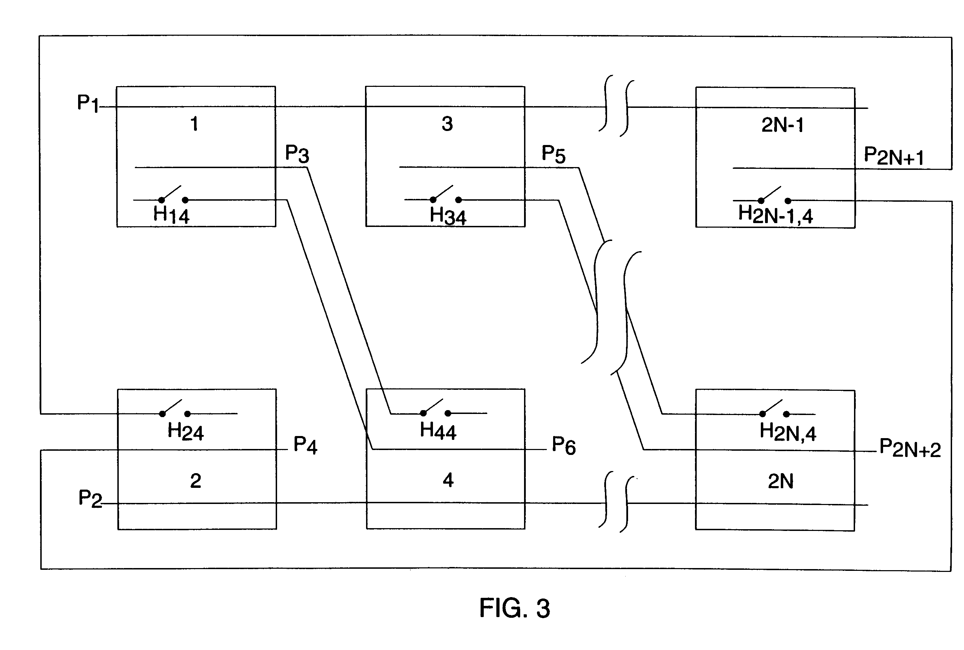

Les deux modes de réalisation de la présente invention sont représentés sur les figures 2 et 3 avec quatre moteurs schématiquement représentés par des cercles. En réalité, cette représentation schématise l'ensemble du moteur et de l'onduleur associé qui ne fait pas l'objet de l'invention et ne sera donc pas décrit dans la suite de la description.

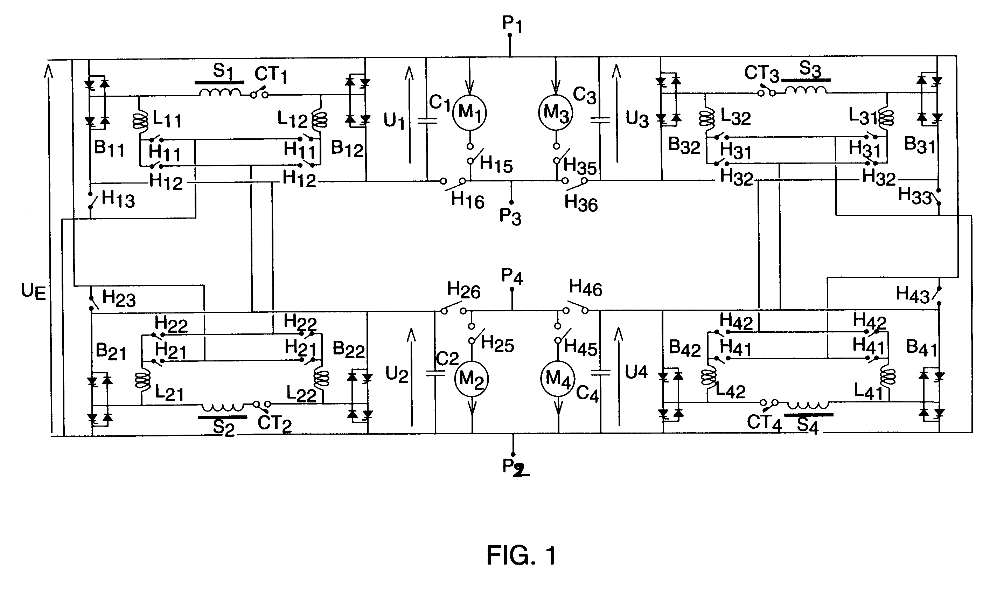

Dans le premier mode de réalisation représenté sur la figure 1, on notera tout d'abord que les commutateurs (souvent appelés sectionneurs) $H_{i5}$ et $H_{i6}$, avec i ayant une valeur de 1 à 4, sont toujours en position fermée sauf en cas de défaillance de certains éléments du système comme on le verra par la suite. Dans ce mode de réalisation les deux moteurs $M_1$ et $M_3$ sont connectés en parallèle entre les points $P_1$ et $P_3$, et les deux moteurs M2 et $M_4$ sont connectés en parallèle entre les

points $P_2$ et $P_4$. Chaque moteur est alimenté par une tension reçue aux bornes d'un condensateur de charge $U_1$ pour le moteur $M_1$, $U_2$ pour le $M_2$, $U_3$ pour $M_3$ et $U_4$ pour $M_4$.

Le circuit alimentant chaque condensateur associé à un moteur se compose principalement d'une paire de convertisseurs de tension. Ainsi, aux bornes du condensateur $C_1$ sont connectés en parallèle les convertisseurs $B_{11}$ et $B_{12}$. Chacun de ces convertisseurs de tension est du type à thyristors GTO qui permettent d'imposer la tension de sortie recueillie en leur point milieu grâce à des signaux de commande appliqués sur les gâchettes des thyristors. La gâchette de chacun des 2 thyristors du convertisseur est commandée de façon opposée par un signal logique à fréquence fixe modulé en largeur d'impulsion d'une valeur moyenne comprise entre 0 et 1, ce qui permet d'avoir une valeur de tension de sortie qui est fonction de la largeur des impulsions du signal de commande appliqué aux gâchettes des thyristors. Cette technique est bien connue et expliquée dans de nombreux ouvrages spécialisés, ainsi que dans l'article cité ci-dessus, et ne sera pas expliqué plus amplement dans le cadre de cette description. On doit noter toutefois, que bien que l'emploi de thyristors est le mode d'implémentation préféré pour les convertisseurs de tension utilisés dans l'invention, il va de soi que tout autre système de commutation remplissant la même fonction que les thyristors pourrait être utilisé.

Comme il a déjà été mentionné, la locomotive peut se trouver dans une zone où l'alimentation est en courant alternatif, par exemple du 25kV à 50Hz. Dans ce cas, les deux convertisseurs d'une même paire de convertisseurs sont réunis pour former un convertisseur quatre quadrants bien connu dans la technique. Ainsi, les deux convertisseurs $B_{11}$ et $B_{12}$ sont connectés en leurs points milieux, à la fermeture du commutateur $CT_1$, par l'intermédiaire de l'enroulement secondaire $S_1$ d'un transformateur dont l'enroulement primaire est directement connecté à la source d'alimentation en courant alternatif.

De la même façon, les commutateurs $CT_2$, $CT_3$ et $CT_4$ sont fermés, et les points milieux des autres paires de convertisseurs sont reliés par les enroulements secondaires $S_2$, $S_3$ et $S_4$ du même transformateur dont l'enroulement primaire est alimenté par la source d'alimentation en courant alternatif reçue au moyen de la caténaire.

Il faut noter que, dans le cas de l'alimentation en courant alternatif tous les commutateurs $H_{i1}$, $H_{i2}$, avec i= 1 à 4, sont ouverts.

On notera également que les quatre moteurs sont connectés en parallèle par la fermeture des commutateurs $H_{13}$, $H_{23}$, H33 et $H_{43}$ de sorte que les tensions d'alimentation des moteurs $U_1$, $U_2$, $U_3$ et $U_4$ sont identiques. Ceci permet, en entrelaçant les découpes des convertisseurs $B_{i1}$, $B_{i2}$, de réduire le courant efficace dans les condensateurs $C_i$.

Lorsque la locomotive se trouve dans une zone où l'alimentation est en courant continu, le fonctionnement du système selon le premier mode de réalisation est le suivant.

Si la zone est alimentée en une tension continue de 3kV supérieure à la tension nominale nécessaire à l'alimentation des moteurs généralement de 2,8 kV, les convertisseurs sont amenés à fonctionner en hacheurs abaisseurs de tension. Dans ce cas, le point milieu du convertisseur de tension $B_{11}$ et le point milieu du convertisseur de tension $B_{12}$ sont tous deux connectés par la fermeture du commutateur $H_{12}$ à la ligne correspondant au point de potentiel $P_4$ par l'intermédiaire des inductances $L_{11}$ et $L_{12}$. Inversement, le point milieu du convertisseur de tension $B_{21}$ et le point milieu du convertisseur de tension $B_{22}$ sont tous deux connectés par la fermeture du commutateur $H_{22}$ à la ligne correspondant au point de potentiel $P_3$ par l'intermédiaire des inductances respectives $L_{21}$ et $L_{22}$. De la même façon, le point milieu du convertisseur de tension $B_{31}$ et le point milieu du convertisseur de tension $B_{32}$ sont tous deux connectés, par la fermeture du commutateur $H_{32}$, à la ligne correspondant au potentiel $P_4$ par l'intermédiaire des inductances respectives $L_{31}$ et $L_{32}$; et les points milieux des convertisseurs de tensions $B_{41}$ et $B_{42}$ sont connectés, par la fermeture du commutateur $H_{42}$, à la ligne correspondant au point de potentiel $P_3$ par l'intermédiaire des inductances respectives $L_{41}$ et $L_{42}$.

Comme illustré sur la figure 1, la tension reçue de la source d'alimentation en courant continu est UE entre les points de potentiel P1 et P2, ce dernier pouvant être à la masse. Du fait du montage décrit ci-dessus des convertisseurs en hacheurs abaisseurs de tension, les points P3 et P4 se trouvent à des potentiels intermédiaires entre 0 et 3kV. Bien que cette caratéristique ne fasse pas partie de l'invention, il est bon de rappeler que dans le montage en hacheur abaisseur de tension, le convertisseur $B_{11}$, par exemple, fournit une tension à la sortie de l'inductance $L_{11}$ destinée à charger le condensateur $C_2$ à la tension $U_2$ par rapport au potentiel de $P_2$, (qui peut être considéré comme étant à 0), qui est inférieure à la tension UE et dépend de la largeur des impulsions de commande appliquées sur les gâchettes des thyristors composant les convertisseurs selon un coefficient $\alpha$ compris entre 0 et 1. Ceci résulte du fait que:

$$U_2 = U_E - U_1 + \alpha U_1$$

Puisque

$$U_1 = U_2, \text{ on a}$$

$$U_1 = U_E - U_1 + \alpha U_1$$

soit

$$U_2 = U_1 = U_E / (2 - \alpha)$$

On notera que l'on peut commander de façon à obtenir une tension $U_1$ (ou $U_2$) constante quelles que soient les fluctuations de la tension d'alimentation $U_E$.

Si maintenant la locomotive se trouve dans une zone alimentée en courant continu dont la tension est 1,5 kV, donc inférieure à la tension nominale à fournir aux moteurs, les convertisseurs sont amenés à fonctionner en hacheurs élévateurs de tension. Dans ce cas, les points milieux des convertisseurs de tension $B_{11}$ et $B_{12}$ sont interconnectés et grâce à la fermeture du commutateur $H_{11}$ ($H_{12}$ restant ouvert), à la ligne correspondant au point de potentiel $P_2$ par l'intermédiaire des inductances respectives $L_{11}$ et $L_{12}$. Inversement, les points milieux des convertisseurs de tension $B_{21}$ et $B_{22}$ sont interconnectés et, grâce à la fermeture du commutateur $H_{21}$ ($H_{22}$ restant ouvert), à la ligne correspondant au point de potentiel $P_1$ par l'intermédiaire des inductances respectives $L_{21}$ et $L_{22}$.

De la même façon, les points milieux des convertisseurs de tension $B_{31}$ et $B_{32}$ sont interconnectés et par la fermeture de commutateur $H_{31}$ à la ligne correspondant au point de potentiel $P_2$ par l'intermédiaire des inductances respectives $L_{31}$ et $L_{32}$; et les points milieux des convertisseurs $B_{41}$ et $B_{42}$ sont interconnectés et, grâce à la fermeture du commutateur $H_{41}$, à la ligne correspondant au point de potentiel $P_1$ par l'intermédiaire des inductances respectives $L_{41}$ et $L_{42}$.

Comme il a été mentionné lorsque le montage des convertisseurs était en hacheur abaisseur, la tension d'alimentation appliquée entre les points $P_1$ et $P_2$ est UE. Mais cette fois les points $P_3$ et $P_4$ sont à des potentiels se trouvant en dehors de la plage $P_1$-$P_2$. En effet, bien que le fonctionnement d'un hacheur élévateur est connu et ne fait pas partie de l'invention, il est bon d'en rappeler le principe. Ainsi, le convertisseur $B_{21}$ fournit dans ce cas une tension de charge du condensateur $U_1$ qui est supérieure à la tension d'entrée UE et qui dépend de la largeur des impulsions de commande appliquées sur les gâchettes des thyristors composant le convertisseur et appliquant un coefficient $\alpha$ compris entre 0 et 1 et tel que

$$U1.\alpha = UE$$

soit

$$U1 = UE/\alpha$$

Le mode de réalisation qui vient d'être décrit présente un certain nombre d'avantages par rapport aux systèmes d'alimentation de la technique antérieure. Tout d'abord, si un des moteurs tombe en panne, il est possible de l'isoler par l'ouverture de son commutateur associé soit $H_{15}$ pour $M_1$, $H_{25}$ pour $M_2$, $H_{35}$ pour $M_3$ et $H_{45}$ pour $M_4$. Ceci permet de conserver trois des moteurs en fonctionnement.

Mais surtout, lorsque l'un des convertisseurs de tension est défaillant, cette défaillance n'entraîne pas l'arrêt de tout le système comme c'était le cas dans la technique antérieure. En effet, lorsqu'un convertisseur tombe en panne, il se trouve la plupart du temps en court-circuit. En supposant que le convertisseur défaillant soit $B_{11}$ ou $B_{12}$, le court-circuit a pour résultat de rendre nulle la tension $U_1$. Il est donc nécessaire d'ouvrir le commutateurs (ou sectionneurs) $H_{11}$, $H_{12}$, $H_{13}$, $H_{16}$ et CT1 (lorsque l'alimentation est en courant alternatif) pour isoler les convertisseurs défaillants et continuer à disposer des 4 moteurs. Ce principe de fonctionnement s'applique de la même façon lorsque la défaillance concerne un convertisseur associé à un des 3 autres moteurs par ouverture d'un des commutateurs $H_{i1}$, $H_{i2}$ $H_{i3}$, $H_{i6}$ et $CT_i$.

Dans le schéma illustré par la figure 1, la répartition adoptée de préférence pour les moteurs consiste à avoir les moteurs $M_1$ et $M_2$ sur un bogie et les moteurs $M_3$ et $M_4$ sur l'autre bogie. Mais il va de soi que d'autres répartitions des moteurs sont possibles sans sortir du cadre de l'invention.

Bien que le système représenté sur la figure 1 comporte 4 moteurs, il est possible de généraliser cet assemblage à 2N moteurs. Il suffit, pour chaque couple de moteurs supplémentaires, de connecter le moteur $M_{2i-1}$ et l'ensemble associé comprenant le condensateur de charge et la paire de convertisseurs entre les points $P_1$ et $P_3$, et de connecter le moteur $M_{2i}$ ainsi que son condensateur de charge et la paire de convertisseurs associés entre les points $P_2$ et $P_4$. Les connexions entre les paires de convertisseurs associés à chaque couple de moteur supplémentaire sont réalisées de la même façon qu'illustrée sur la figure 1 telle qu'elle vient d'être décrite en relation avec le premier mode de réalisation. En d'autres termes, chaque branche supplémentaire de deux moteurs comprend des éléments convertisseurs de tension, inductances, commutateurs, identiques à ceux qui se trouvent dans la branche composée des moteurs $M_1$ et $M_2$.

On notera que, dans le cas d'un montage à 2N moteurs, la défaillance d'un moteur ou d'un convertisseur permet, en appliquant les mêmes principes de fonctionnement que ceux décrits en référence à la figure 1, de disposer d'au moins 2N-1 moteurs.

Le second mode de réalisation de la présente invention est maintenant décrit en référence à la figure 2.

Contrairement au premier mode de réalisation de la figure 1, dans ce mode de réalisation, les moteurs ne sont pas connectés en parallèle deux à deux, mais sont indépendants. Mais, de la même façon que précédemment, chaque moteur est alimenté par une tension reçue aux bornes d'un condensateur de charge $U_1$ pour le moteur $M_1$, $U_2$ pour $M_2$, $U_3$ pour $M_3$ et $U_4$ pour $M_4$.

Le circuit alimentant chaque condensateur associé à un moteur est le même que dans le premier mode de réalisation. Comme il a été dit précédemment, bien que l'emploi de thyristors soit le mode d'implémentation préféré pour le choix des convertisseurs de tension, il est clair que tout autre système de commutation remplissant la même fonction que les thyristors, pourrait être utilisé.

Lorsque la locomotive se trouve dans une zone ou l'alimentation est en courant alternatif (25kV à 50Hz), la connexion des convertisseurs est la même que dans le premier mode de réalisation, c'est à dire que les commutateurs ou sectionneurs $CT_i$ et $H_{i3}$, avec i de 1 à 4, sont fermés alors que les commutateurs $H_{i1}$ et $H_{i2}$ sont tous ouverts. Le fonctionnement est le même que dans le premier mode de réalisation.

Lorsque la locomotive se trouve dans une zone où l'alimentation est en courant continu, le fonctionnement du système selon le second mode de réalisation est le suivant.

Si la zone est alimentée en une tension continue de 3kV supérieure à la tension nominale nécessaire à l'alimentation des moteurs, généralement de 2,8 kV, les convertisseurs sont amenés à fonctionner en hacheurs abaisseurs de tension. Dans ce cas, le point milieu du convertisseur de tension $B_{11}$ est connecté, par la fermeture du commutateur $H_{12}$, à la ligne correspondant au point de potentiel $P_4$ par l'intermédiaire de l'inductance $L_{11}$, et le point milieu du convertisseur de tension $B_{12}$ est connecté, par la fermeture du commutateur $H_{14}$, à la ligne correspondant au point de potentiel $P_6$ par l'intermédiaire de l'inductance $L_{12}$.

Inversement, le point milieu du convertisseur de tension $B_{21}$ est connecté, par la fermeture du commutateur $H_{22}$, à la ligne correspondant au point de potentiel $P_3$ par l'intermédiaire de l'inductance $L_{21}$; et le point milieu du convertisseur de tension $B_{22}$ est connecté par la fermeture du commutateur $H_{24}$, à la ligne correspondant au point de potentiel $P_5$ par l'intermédiaire de l'inductance $L_{22}$.

De la même façon, le point milieu du convertisseur de tension $B_{31}$ est connecté, par la fermeture du commutateur $H_{32}$, à la ligne correspondant au point de potentiel $P_6$ par l'intermédiaire de l'inductance $L_{31}$; et le point milieu du convertisseur de tension $B_{32}$ est connecté, par la fermeture du commutateur $H_{34}$, à la ligne correspondant au point de potentiel $P_4$ par l'intermédiaire de l'inductance $L_{32}$.

Inversement, le point milieu du convertisseur de tension $B_{41}$ est connecté, par la fermeture du commutateur $H_{42}$, à la ligne correspondant au point de potentiel $P_5$ par l'intermédiaire de l'inductance $L_{41}$; et le point milieu du convertisseur de tension $B_{42}$ est connecté, par la fermeture du commutateur $H_{44}$ à la ligne correspondant au point de potentiel $P_3$ par l'intermédiaire de l'inductance $L_{42}$.

Comme illustré sur la figure 2, la tension reçue de la source d'alimentation en courant continu est UE entre les points de potentiels $P_1$ et $P_2$, ce dernier pouvant être à la masse. Du fait que les convertisseurs du montage illustré sur la figure 2 sont des hacheurs abaisseurs de tension, les points $P_3$, $P_4$, $P_5$ et $P_6$ sont à des potentiels intermédiaires entre $P_1$ et $P_2$. Le fonctionnement des convertisseurs en hacheurs abaisseurs de tension, connu, a déjà été rappelé en référence à la figure 1 et il est donc inutile de le faire à nouveau.

Si maintenant la locomotive se trouve dans une zone alimentée en courant continu dont la tension est inférieure à la tension nominale devant être fournie aux moteurs, les convertisseurs sont montés pour fonctionner en hacheurs élévateurs de tension. Dans ce cas, il est inutile de décrire à nouveau les connexions réalisées puisqu'elles sont les mêmes que les connexions réalisées dans le premier mode de réalisation décrit en référence à la figure 1, lorsque les convertisseurs sont utilisés comme hacheurs élévateurs de tension.

Comme il a été mentionné lorsque le montage des convertisseurs les faisait fonctionner comme hacheurs abaisseurs de tension, la tension appliquée entre les points $P_1$ et $P_2$ est UE, mais les points $P_3$, $P_4$, $P_5$ et $P_6$ sont à des potentiels se trouvant en dehors de la plage $P_1$-$P_2$. Outre que le fonctionnement des convertisseurs en hacheurs élévateurs de tension est connu, un rappel succinct en a déjà été donné lors de la description du premier mode de réalisation en référence à la figure 1. A la différence du premier mode de réalisation, la tension d'alimentation des quatre moteurs est contrôlée indépendamment pour chacun d'eux. C'est pour cette raison que, contrairement à la figure 1, le montage de la figure 2 ne comporte pas de commutateurs ou sectionneurs $H_{i5}$ et $H_{i6}$ (avec i de 1 à 4) permettant d'isoler le moteur $M_i$ en cas de défaillance, soit du moteur lui-même, soit d'un convertisseur associé au moteur, par exemple par court-circuit. Dans un tel cas de défaillance, la locomotive dispose encore de trois moteurs sur quatre.

Comme il a déjà été mentionné lors de la description de la figure 1, la répartition adoptée de préférence pour les moteurs consiste à avoir les moteurs M1 et $M_2$ sur un bogie et les moteurs $M_3$ et $M_4$ sur l'autre bogie. Mais il va de soi que d'autres répartitions des moteurs sont possibles sans sortir du cadre de l'invention.

Bien que le mode de réalisation décrit en référence à la figure 2 comporte seulement 4 moteurs, il est possible de généraliser ce mode de réalisation à 2N moteurs comme l'illustre la figure 3.

Les connexions amenant les convertisseurs à fonctionner en hacheurs élévateurs de tension ne posent pas de problème en cas d'ajout supplémentaire de deux moteurs puisque les connexions sont réalisées entre les paires de convertisseurs associés aux deux moteurs supplémentaires. Ainsi, sur la figure 3 , les connexions (non montrées) pour obtenir le montage des convertisseurs en hacheurs élévateurs sont entre le groupe 1 et le groupe 2, entre le groupe 3 et le groupe 4,... entre le groupe 2N-1 et le groupe 2N.

Par contre, dans le montage des convertisseurs en hacheurs abaisseurs, seules deux connexions sont réalisées entre les deux groupes qui sont face à face, soit entre le groupe 1 et le groupe 2,... le groupe 2N-1 et le groupe 2N. Mais deux autres connexions sont réalisées de la façon illustrée sur la figure 3. A savoir que le groupe 1 est connecté par le commutateur $H_{14}$ à la ligne du groupe 4 correspondant au point de potentiel $P_6$, et le groupe 4 est connecté par le commutateur $H_{44}$ à la ligne du groupe 1 correspondant au point de potentiel $P_3$, et ainsi de suite..., jusqu'au groupe 2N-3 qui est connecté par le commutateur $H_{2N-3,4}$ à la ligne du groupe 2N correspondant au point de potentiel $P_{2N+2}$, et le groupe 2N est connecté par le commutateur $H_{2N,4}$ à la ligne du groupe 2N-3 correspondant au point de potentiel $P_{2N-1}$. Enfin, le groupe 2N-1 est connecté par le commutateur $H_{2N-1,4}$ à la ligne du groupe 2 correspondant au point de potentiel $P_4$, et le groupe 2 est connecté par le commutateur $H_{24}$ à la ligne du groupe 2N correspondant au point de potentiel $P_{2N+2}$.

On doit noter que, dans le cas d'un montage à 2N moteurs comme celui illustré sur la figure 3, la défaillance d'un moteur ou d'un convertisseur permet, en appliquant les mêmes principes de fonctionnement que ceux mis en oeuvre dans le montage à 4 moteurs de la figure 2, de disposer d'au moins 2N-1 moteurs.

**Revendications**

1. Système d'alimentation d'une locomotive multicourant à 2N moteurs, avec N supérieur ou égal à 2, comprenant 2N paires de convertisseurs de tension associés respectivement aux 2N moteurs, chacun desdits moteurs étant alimenté au moyen d'un onduleur connecté aux bornes d'un condensateur de charge ($C_1$ à $C_4$) et chacune desdites paires comportant un premier et un second convertisseurs de tension connectés en parallèle aux bornes dudit condensateur de charge, le point milieu du premier convertisseur de chaque paire de convertisseurs pouvant être connecté au point milieu du second convertisseur de ladite paire de façon à ce que chacune des paires de convertisseurs forme un convertisseur 4 quadrants, cette connexion étant réalisée par l'intermédiaire de l'enroulement secondaire ($S_1$, $S_2$, $S_3$, $S_4$) d'un transformateur dont l'enroulement primaire est connecté directement aux bornes d'une alimentation alternative et d'un sectionneur ($CT_1$, $CT_2$, $CT_3$, $CT_4$) en position fermée lorsque la locomotive doit être alimentée en courant alternatif; ledit système étant caractérisé en ce que, lorsque la locomotive est alimentée en courant continu, et en considérant i tel que $1 \leq i \leq N$ :

- les moteurs $M_{2i}$ sont tous connectés en parallèle et les moteurs $M_{2i-1}$ sont également tous connectés en parallèle,
- les points milieux des premier ($B_{11}$) et second ($B_{12}$) convertisseurs de chaque paire 2i-1 de convertisseurs de tension sont connectés à la paire 2i de convertisseurs de tension ($B_{21}$ et $B_{22}$) par l'intermédiaire d'une inductance ($L_{11}$

ou $L_{12}$), et les points milieux des premier ($B_{21}$) et second ($B_{22}$) convertisseurs de chaque paire 2i de convertisseurs de tension sont connectés à la paire 2i-1 de convertisseurs de tension ($B_{11}$ et $B_{12}$) par l'intermédiaire d'une inductance ($L_{21}$ ou $L_{22}$),

- un commutateur ($H_{i1}$, $H_{i2}$) associé à chacune desdites paires de convertisseurs de tension permet:

    a) dans une première position ($H_{i1}$), de connecter chacune desdites paires 2i ou 2i-1 de convertisseurs de tension en tant que hacheur abaisseur de tension pour le moteur $M_{2i-1}$ ou $M_{2i}$ respectivement, lorsque la tension d'alimentation continue alimentant la locomotive est plus élevée que la tension nécessaire aux bornes de chacun desdits moteurs, et

    b) dans une deuxième position ($H_{i2}$), de connecter chacune desdites paires 2i ou 2i-1 de convertisseurs de tension en tant que hacheur élévateur de tension pour le moteur $M_{2i-1}$ ou $M_{2i}$ respectivement lorsque la tension d'alimentation continue alimentant la locomotive est moins élevée que la tension nécessaire aux bornes de chacun desdits moteurs.

2. Système d'alimentation d'une locomotive multicourant à 2N moteurs, avec N supérieur ou égal à 2, comprenant 2N paires de convertisseurs de tension associés respectivement aux 2N moteurs, chacun desdits moteurs étant alimenté au moyen d'un onduleur connecté aux bornes d'un condensateur de charge $C_1$ à $C_4$) et chacune desdites paires comportant un premier et un second convertisseurs de tension connectés en parallèle aux bornes dudit condensateur de charge, le point milieu du premier convertisseur de chaque paire de convertisseurs pouvant être connecté au point milieu du second convertisseur de ladite paire de façon à ce que chacune des paires de convertisseurs forme un convertisseur 4 quadrants, cette connexion étant réalisée par l'intermédiaire de l'enroulement secondaire ($S_1$, $S_2$, $S_3$, $S_4$) d'un transformateur dont l'enroulement primaire est connecté directement aux bornes d'une alimentation alternative et d'un sectionneur ($CT_1$, $CT_2$, $CT_3$, $CT_4$) en position fermée lorsque la locomotive doit être alimentée en courant alternatif; ledit système étant caractérisé en ce que,

    a) lorsque la locomotive est alimentée en courant continu dont la tension est supérieure à la tension d'alimentation desdits moteurs, et en considérant i tel que $1 \leq i \leq N$ :

- le point milieu du premier convertisseur $(B_{11})$ de chaque paire 2i-1 de convertisseurs de tension est connecté au point de potentiel haut $(P_4)$ de la paire 2i de convertisseurs de tension $(B_{21}$ et $B_{22})$ par l'intermédiaire d'une inductance $(L_{11})$ et le point milieu du premier convertisseur $(B_{21})$ de chaque paire 2i de convertisseurs de tension est connecté au point de potentiel bas $(P_3)$ de la paire 2i-1 de convertisseurs de tension $(B_{11}$ et $B_{12})$ par l'intermédiaire d'une inductance $(L_{21})$,

- le point milieu du second convertisseur $(B_{12})$ de chaque paire 2i-1 de convertisseurs de tension est connecté au point de potentiel haut $(P_6)$ de la paire 2i+2 de convertisseurs de tension $(B_{41}$ et $B_{42})$ par l'intermédiaire d'une inductance $(L_{12})$ et le point milieu du second convertisseur $(B_{22})$ de chaque paire de convertisseurs de tension 2i est connecté au point de potentiel bas $(P_5)$ de la paire 2i+1 de convertisseurs de tension $(B_{31}$ et $B_{32})$ par l'intermédiaire d'une inductance $(L_{22})$,

- le point milieu du second convertisseur $(B_{32})$ de la paire 2N-1 de convertisseurs de tension est connecté au point de potentiel haut $(P_4)$ de la paire 2 de convertisseurs de tension $(B_{21}$ et $B_{22})$ par l'intermédiaire d'une inductance $(L_{32})$ et le point milieu du second convertisseur $(B_{42})$ de la paire 2N de convertisseurs de tension est connecté au point de potentiel bas $(P_3)$ de la paire 1 de convertisseurs de tension $(B_{11}$ et $B_{12})$ par l'intermédiaire d'une inductance $(L_{42})$,

- de sorte que lesdits convertisseurs de tension fonctionnent en hacheurs abaisseurs de tension; et

b) lorsque la locomotive est alimentée en courant continu dont la tension est inférieure à la tension d'alimentation desdits moteurs, et toujours en considérant i tel que $1 \leq i \leq N$,

- les points milieux des premier $(B_{11})$ et second $(B_{12})$ convertisseurs de chaque paire 2i-1 de convertisseurs de tension sont connectés au point de potentiel bas $(P_2)$ de la paire 2i de convertisseurs de tension $(B_{21}$ et $B_{22})$ par l'intermédiaire d'une inductance $(L_{11}$ ou $L_{12})$, et les points milieux des premier $(B_{21})$ et second $(B_{22})$ convertisseurs de chaque paire 2i de convertisseurs de tension sont connectés au point de potentiel haut $(P_1)$ de la paire 2i-1 de convertisseurs de tension $(B_{11}$ et $B_{12})$ par l'intermédiaire d'une inductance $(L_{21}$ ou $L_{22})$,

- de sorte que lesdits convertisseurs de tension fonctionnent en hacheurs élévateurs de tension.

3. Système selon la revendication 1 ou 2, dans lequel lesdits convertisseurs de tension sont composés de thyristors GTO commandés chacun par un signal de commande appliqué sur la gâchette dudit thyristor.

4. Système selon la revendication 1, 2 ou 3, dans lequel ledit sectionneur (CTi) est ouvert en cas de défaillance de l'un desdits premier $(B_{i1})$ et second $(B_{i2})$ convertisseurs de ladite paire de convertisseurs de tension associée audit sectionneur, lorsque la locomotive est alimentée en courant alternatif.

5. Système selon la revendication 1 à 4, dans lequel chacune desdites paires de convertisseurs $(B_{i1}$ et $B_{i2})$ de courant est connectée audit moteur associé au moyen d'un sectionneur $(H_{16}, H_{26}, H_{36}, H_{46})$ qui est ouvert lorsqu'une défaillance survient à l'un desdits premier ou second convertisseurs de ladite paire de convertisseurs de tension.

6. Système selon la revendication 5, dans lequel chacun desdits moteurs peut être déconnecté totalement du système au moyen d'un sectionneur $(H_{15}, H25, H_{35}, H_{45})$ lorsque ledit moteur tombe en panne.

7. Système selon la revendication 6, dans lequel chaque couple de moteurs $M_{2i-1}$ et $M_{2i}$ est monté sur un bogie.

8. Système selon la revendication 7, dans lequel i=2, les moteurs $M_1$ et $M_2$ entraînant un premier bogie et les moteurs $M_3$ et $M_4$ entraînant un second bogie, de telle sorte que la défaillance d'un desdits convertisseurs de tension ou d'un desdits moteurs permet de conserver au moins 75% de la puissance nominale du système et de continuer d'entraîner les deux bogies malgré ladite défaillance.

**Claims**

1. A multicurrent power supply system for a locomotive having 2N motors, where N is greater than or equal to 2, the system comprising 2N pairs of voltage converters respectively associated with the 2N motors, each of said motors being powered by means of an inverter connected to the terminals of a parallel capacitor $(C_1$ to $C_4)$, and each of said pairs of converters comprising a first voltage converter and a second voltage converter which are connected in parallel with the terminals of said parallel capacitor; when the locomotive is to be powered with AC, the midpoint of the first voltage converter in each pair of converters is connected to the midpoint of the second converter of the same pair in such a manner as to enable each of the pairs of converters to form a 4-quadrant converter, said connection being implemented via the secondary winding ($S_1$, $S_2$, $S_3$, $S_4$) of a transformer whose primary winding is connected directly to the terminals of an AC power supply and a section switch ($CT_1$, $CT_2$, $CT_3$, $CT_4$) in the closed position;

said system being characterized in that, when the locomotive is to be powered with DC, and for $i$ such that $1 \leq i \leq N$;
the motors $M_{2i}$ are all connected in parallel and the motors $M_{2i-1}$ are likewise all connected in parallel;
the midpoints of the first and second converters ($B_{11}$, $B_{12}$) in each pair 2i-1 of voltage converters are connected to the pair 2i of voltage converters ($B_{21}$ and $B_{22}$) via respective inductors ($L_{11}$ or $L_{12}$), and the midpoints of the first and second converters ($B_{21}$, $B_{22}$) of each pair 2i of voltage converters are connected to the pair 2i-1 of voltage converters ($B_{11}$ and $B_{12}$) via respective inductors ($L_{21}$ or $L_{22}$); and
a switch ($H_{i1}$, $H_{i2}$) associated with each of said pairs of voltage converters makes the following possible:

a) in a first position ($H_{i1}$) to connect each of said pairs 2i or 2i-1 of voltage converters as a voltage-lowering chopper for the motor $M_{2i-1}$ or $M_{2i}$ respectively, when the DC power supply voltage of the locomotive is greater than the voltage required across the terminals of each of said motors; and
b) in a second position ($H_{i2}$), to connect each of said pairs 2i or 2i-1 of voltage converters as a voltage-raising chopper for the motor $M_{2i-1}$ or $M_{2i}$ respectively when the DC power supply voltage feeding the locomotive is less than the voltage required across the terminals of each of said motors.

2. A multicurrent power supply system for a locomotive having 2N motors, where N is greater than or equal to 2, the system comprising 2N pairs of voltage converters respectively associated with the 2N motors, each of said motors being powered by means of an inverter connected to the terminals of a parallel capacitor ($C_1$ to $C_4$) and each of said pairs of converters comprising a first voltage converter and a second voltage converter which are connected in parallel with the terminals of said parallel capacitor; when the locomotive is to be powered with AC, the midpoint of the first voltage converter in each pair of converters is connected to the midpoint of the second converter of the same pair in such a manner as to enable each of the pairs of converters to form a 4-quadrant converter, said connection being implemented via the secondary winding ($S_1$, $S_2$, $S_3$, $S_4$) of a transformer whose primary winding is connected directly to the terminals of an AC power supply and a section switch ($CT_1$, $CT_2$, $CT_3$, $CT_4$) in the closed position;

said system being characterized in that:

a) when the locomotive is powered with DC at a voltage that is greater than the power supply voltage of said motors, and assuming that $i$ is such that $1 \leq i \leq N$:

i) the midpoint of the first converter ($B_{11}$) of each pair 2i-1 of voltage converters is connected to the high potential point ($P_4$) of the pair 2i of voltage converters ($B_{21}$ and $B_{22}$) via an inductor ($L_{11}$) and the midpoint of the first converter ($B_{21}$) of each pair 2i of voltage converters is connected to the low potential point ($P_3$) of the pair 2i-1 of voltage converters ($B_{11}$ and $B_{12}$) via an inductor ($L_{21}$);
ii) the midpoint of the second converter ($B_{12}$) of each pair 2i-1 of voltage converters is connected to the high potential point (P6) of the pair 2i+2 of voltage converters ($B_{41}$ and $B_{42}$) via an inductor ($L_{12}$) and the midpoint of the second converter ($B_{22}$) of each pair of voltage converters 2i is connected to the low potential point ($P_5$) of the pair 2i+1 of voltage converters ($B_{31}$ and $B_{32}$) via an inductor ($L_{23}$); and
iii) the midpoint of the second converter ($B_{32}$) of the pair 2N-1 of voltage converters is connected to the high potential point ($P_4$) of the pair 2 of voltage converters ($B_{21}$ and $B_{22}$) via an inductor ($L_{32}$) and the midpoint of the second converter ($B_{42}$) of the pair 2N of voltage converters is connected to the low potential point ($P_3$) of the pair 1 of voltage converters ($B_{11}$ and $B_{12}$) via an inductor ($L_{42}$);

such that said voltage converters operate as voltage-lowering choppers; and
b) when the locomotive is powered with DC at a voltage lower than the power supply voltage of said motors, and still assuming that $i$ is such that $1 \leq i \leq N$:

the midpoints of the first and second converters ($B_{11}$, $B_{12}$) of each pair $2i-1$ of voltage converters are connected to the low potential point ($P_2$) of the pair $2i$ of voltage converters ($B_{21}$ and $B_{22}$) via respective inductors ($L_{11}$ or $L_{12}$), and the midpoints of the first and second converters ($B_{21}$, $B_{22}$) of each pair $2i$ of voltage converters are connected to the high potential point ($P_1$) of the pair $2i-1$ of voltage converters ($B_{11}$ and $B_{12}$) via respective inductors ($L_{21}$ and $L_{22}$); and

in such a manner that said voltage converters operate as voltage-raising choppers.

3. A system according to claim 1 or 2, in which said voltage converters are constituted by GTO thyristors each controlled by a control signal applied to its gate.

4. A system according to claim 1, 2, or 3, in which, when the locomotive is being powered with AC, said section switch ($CT_i$) is opened in the event of a failure of one of said first and second converters ($B_{i1}$ and $B_{i2}$) of the second pair of voltage converters associated with said section switch.

5. A system according to any one of claims 1 to 4, in which each of said pairs of voltage converters ($B_{i1}$ and $B_{i2}$) is connected to said associated motor by means of a section switch ($H_{16}$, $H_{26}$, $H_{36}$, $H_{46}$) which is opened when a fault occurs on one of said first and second converters in said pair of voltage converters.

6. A system according to claim 5, in which each of said motors can be totally disconnected from the system by means of a section switch ($H_{15}$, $H_{25}$, $H_{35}$, $H_{45}$) when said motor breaks down.

7. A system according to claim 6, in which each pair of motors $M_{2i-1}$ and $M_{2i}$ is mounted on a single bogey.

8. A system according to claim 7, in which i=2, motors $M_1$ and $M_2$ driving a first bogey and motors $M_3$ and $M_4$ driving a second bogey, such that a failure of one of said voltage converters or of one of said motors enables at least 75% of the nominal power of the system to be conserved and enables both bogeys to be driven in spite of said failure.

## Patentansprüche

1. Stromversorgungssystem für eine Mehrstromlokomotive mit 2N Motoren, wobei N ≥ 2 ist, mit 2N Paaren von Spannungsumformern, die jeweils den 2N Motoren zugeordnet sind, wobei jeder der Motoren mit Hilfe eines an die Anschlüsse eines Lastkondensators ($C_1$ - $C_4$) angeschlossenen Wechselrichters versorgt wird und jedes der Paare einen ersten und einen zweiten Spannungsumformer aufweist, die parallel an die Anschlüsse des Lastkondensators angeschlossen sind, wobei der Mittelpunkt des ersten Umformers jedes Paares von Umformern an den Mittelpunkt des zweiten Umformers des Paares so angeschlossen sein kann, dass jedes der Paare von Umformern einen Vierquadrantenumformer bildet, wobei dieser Anschluss über die Sekundärwicklung ($S_1$, $S_2$, $S_3$, $S_4$) eines Transformators, dessen Primärwicklung direkt an die Anschlüsse einer Wechselspannungsversorgung angeschlossen ist, und einen Trennschalter ($CT_1$, $CT_2$, $CT_3$, $CT_4$) in geschlossener Position hergestellt ist, wenn die Lokomotive mit Wechselstrom versorgt werden soll;

**dadurch gekennzeichnet**, dass dann, wenn die Lokomotive mit Gleichstrom versorgt wird, für i mit $1 \leq i \leq N$,

- die Motoren $M_{2i}$ alle parallel geschaltet sind und die Motoren $M_{2i-1}$ ebenfalls alle parallel geschaltet sind,

- die Mittelpunkte des ersten ($B_{11}$) und des zweiten ($B_{12}$) Umformers jedes Paares $2i-1$ von Spannungsumformern an das Paar $2i$ von Spannungsumformern ($B_{21}$ und $B_{22}$) über eine Induktivität ($L_{11}$ oder $L_{12}$) und die Mittelpunkte des ersten ($B_{22}$) und des zweiten ($B_{22}$) Umformers jedes Paares $2i$ von Spannungsumformern an das Paar $2i-1$ von Spannungsumformern ($B_{11}$ und $B_{12}$) über eine Induktivität ($L_{21}$ oder $L_{22}$) angeschlossen sind, und

- ein jedem der Paare von Spannungsumformern zugeordneter Umschalter ($H_{i1}$, $H_{i2}$) es ermöglicht:

    a) in einer ersten Position ($H_{i1}$) jedes der Paare $2i$ oder $2i-1$ von Spannungsumformern als Abwärtsspannungszerhacker für den Motor $M_{2i-1}$ bzw. $M_{2i}$ anzuschließen, wenn die Gleichstromversorgungsspannung, mit der die Lokomotive versorgt wird, höher als die an den Anschlüssen jedes der Motoren notwendige Spannung ist, und

    b) in einer zweiten Position jedes der Paare $2i$ oder $2i-1$ von Spannungsumformern als Aufwärtsspannungszerhacker für den Motor $M_{2i-1}$ bzw. $M_{2i}$ anzuschließen, wenn die Gleichstromversorgungsspannung, mit der die Lokomotive versorgt wird, weniger hoch ist als die an den Anschlüssen jedes der Motoren notwendige Spannung.

2. Stromversorgungssystem für eine Mehrstromlokomotive mit 2N Motoren, wobei N ≥ 2 ist, mit 2N Paaren von Spannungsumformern, die jeweils den 2N Motoren zugeordnet sind, wobei jeder der Motoren mit Hilfe eines an die Anschlüsse eines Lastkondensators ($C_1$ bis $C_4$) angeschlossenen Wechselrichters versorgt wird und jedes der Paare einen ersten und einen zweiten Spannungsumformer umfasst, die parallel an die Anschlüsse des Lastkondensators angeschlossen sind, wobei der Mittelpunkt des ersten Umformers jedes Paares von Umformern an den Mittelpunkt des zweiten Umformers des Paares so angeschlossen sein kann, dass jedes der Paare von Umformern einen Vierquadrantenumformer bildet, wobei dieser Anschluss über die Sekundärwicklung ($S_1$, $S_2$, $S_3$, $S_4$) eines Transformators, dessen Primärwicklung direkt an die Anschlüsse einer Wechselspannungsversorgung angeschlossen ist, und einen Trennschalter ($C_{T1}$, $C_{T2}$, $C_{T3}$, $C_{T4}$) in geschlossener Position hergestellt ist, wenn die Lokomotive mit Wechselstrom versorgt werden soll;
dadurch gekennzeichnet, dass

a) wenn die Lokomotive mit Wechselstrom versorgt wird, dessen Spannung höher ist als die Versorgungsspannung der Motoren, für i mit $1 \leq i \leq N$,

- der Mittelpunkt des ersten Umformers ($B_{11}$) jedes Paares 2i-1 von Spannungsumformern an den Punkt mit hohem Potential ($P_4$) des Paares 2i von Spannungsumformern ($B_{21}$ und $B_{22}$) über eine Induktivität ($L_{11}$) und der Mittelpunkt des ersten Umformers ($B_{21}$) jedes Paares 2i von Spannungsumformern an den Punkt mit niedrigem Potential ($P_3$) des Paares 2i-1 von Spannungsumformern ($B_{11}$ und $B_{12}$) über eine Induktivität ($L_{21}$) angeschlossen ist,

- der Mittelpunkt des zweiten Umformers ($B_{12}$) jedes Paares 2i-1 von Spannungsumformern an den Punkt mit hohem Potential ($P_6$) des Paares 2i+2 von Spannungsumformern ($B_{41}$ und $B_{42}$) über eine Induktivität ($L_{12}$) angeschlossen ist und der Mittelpunkt des zweiten Umformers ($B_{22}$) jedes Paares von Spannungsumformern 2i an den Punkt mit niedrigem Potential ($P_5$) des Paares 2i+1 von Spannungsumformern ($B_{31}$ und $B_{32}$) über eine Induktivität ($L_{23}$) angeschlossen ist,

- der Mittelpunkt des zweiten Umformers ($B_{32}$) des Paares 2N-1 von Spannungsumformern an den Punkt mit hohem Potential ($P_4$) des Paares 2 von Spannungsumformern ($B_{21}$ und $B_{22}$) über eine Induktivität ($L_{32}$) angeschlossen ist und der Mittelpunkt des zweiten Umformers ($B_{42}$) des Paares 2N von Spannungsumformern an den Punkt mit niedrigem Potential ($P_3$) des Paares 1 von Spannungsumformern ($B_{11}$ und $B_{12}$) über eine Induktivität ($L_{42}$) angeschlossen ist,

- so dass die Spannungsumformer als Abwärtsspannungszerhacker arbeiten; und

b) wenn die Lokomotive mit Gleichstrom versorgt wird, dessen Spannung niedriger als die Versorgungsspannung der Motoren ist, für i mit $1 \leq i \leq N$,

- die Mittelpunkte des ersten ($B_{11}$) und des zweiten ($B_{12}$) Umformers jedes Paares 2i-1 von Spannungsumformern an den Punkt mit niedrigem Potential ($P_2$) des Paares 2i von Spannungsumformern ($B_{21}$ und $B_{22}$) über eine Induktivität ($L_{11}$ oder $L_{12}$) angeschlossen sind und die Mittelpunkte des ersten ($B_{21}$) und des zweiten ($B_{22}$) Umformers jedes Paares 2i von Spannungsumformern an den Punkt mit hohem Potential ($P_1$) des Paares 2i-1 von Spannungsumformern ($B_{11}$ und $B_{12}$) über eine Induktivität ($L_{21}$ oder $L_{22}$) angeschlossen sind,

- so dass die Spannungsumformer als Aufwärtsspannungszerhacker arbeiten.

3. System nach Anspruch 1 oder 2, bei dem die Spannungsumformer aus GTO-Thyristoren aufgebaut sind, die jeder durch ein an den Trigger des Thyristors angelegtes Steuersignal gesteuert sind.

4. System nach Anspruch 1, 2 oder 3, bei dem der Trennschalter (CTi) im Fall einer Störung des ersten ($B_{i1}$) oder zweiten ($B_{i2}$) Umformers des, dem Trennschalter zugeordneten Spannungsumformerpaares geöffnet ist, wenn die Lokomotive mit Wechselstrom versorgt ist.

5. System nach Anspruch 1 bis 4, bei dem jedes der Stromumformerpaare ($B_{i1}$ und $B_{i2}$) an den zugeordneten Motor über einen Trennschalter ($H_{16}$, $H_{26}$, $H_{36}$, $H_{46}$) angeschlossen ist, der geöffnet wird, wenn eine Störung am ersten oder zweiten Umformer des Spannungsumformerpaares auftritt.

6. System nach Anspruch 5, bei dem jeder der Motoren mit Hilfe eines Trennschalters ($H_{15}$, $H_{25}$, $H_{35}$, $H_{45}$) völlig vom System getrennt werden kann, wenn der Motor ausfällt.

7. System nach Anspruch 6, bei dem jedes Paar von Motoren ($M_{2i-1}$ und $M_{2i}$) auf einem Drehgestell montiert ist.

8. System nach Anspruch 7, bei dem i=2 ist und die Motoren $M_1$ und $M_2$ ein erstes Drehgestell antreiben und die Motoren $M_3$ und $M_4$ ein zweites Drehgestell antreiben, so dass die Störung eines der Spannungsumformer oder eines der Motoren es gestattet, wenigstens 75 % der Nennleistung des Systems zu bewahren und die zwei Drehgestelle trotz der Störung weiter anzutreiben.

FIG. 1

FIG. 2

EP 0 657 321 B1

FIG. 3